# EUROPÄISCHE PATENTSCHRIFT

(11) **EP 0 367 924 B1**
(45) Veröffentlichungstag und Bekanntmachung des Hinweises auf die Patenterteilung: **05.01.1994**
(21) Anmeldenummer: 89115621.8
(22) Anmeldetag: 24.08.1989
(51) Int. Cl.: B23K 26/02, B23K 26/04, B23Q 35/128

(54) **Verfahren und Vorrichtung zum Bestimmen der Position einer Nahtfuge zum Laserschweissen**
Procedure and apparatus for determing the position of a seam for laser welding
Procédé et dispositif pour déterminer la position d'un joint d'une soudure pour le soudage à laser

(30) Priorität: 10.09.1988 DE 3830892
(43) Veröffentlichungstag der Anmeldung: 16.05.1990
(73) Patentinhaber: Fried. Krupp AG Hoesch-Krupp, 45143 Essen (DE)
(72) Erfinder: Büchel, Manfred, Dr. rer. nat., D-4330 Mülheim a. d. Ruhr (DE); Hangmann, Norbert, D-4200 Oberhausen (DE)

(56) Entgegenhaltungen:
- EP-A- 0 163 347
- EP-A- 0 188 817
- EP-A- 0 266 764
- US-A- 4 700 045
- TECHNISCHES MESSEN TM.Band 51, Nr. 7/8, 1984, Seiten 259-263, München, DE ; L.H.J.F. BECKMANN : "Elektrooptischer Sensor für die Automatisierung des Lichtbogenschweissens".

## Beschreibung

Die Erfindung betrifft ein Verfahren zum Bestimmen der Lage einer Nahtfuge bezüglich einer Sollage nach dem Oberbegriff des Anspruchs 1 sowie eine Vorrichtung zur Durchführung des Verfahrens nach dem Oberbegriff des Anspruchs 5.

Bei schweißtechnischen Laseranwendungen werden - soweit es sich um die Herstellung einer geradlinigen Schweißnaht handelt - vorzugsweise der Anfangs- und Endpunkt der Nahtfuge mit Hilfe eines genau in Richtung der Achse des Laserarbeitsstrahls eingeblendeten Meßstrahls ermittelt. Die betreffenden Meßwerte werden in das den Laserarbeitsstrahl steuernde Programm eingegeben, unter dessen Einwirkung - im vorliegenden Fall geradlinig - zwischen den ermittelten Punkten geschweißt wird.
Probleme können dadurch entstehen, daß eine vorbereitete Schweißnaht nicht immer ihrem Sollverlauf entspricht. Dies kann unter anderem durch eine fehlerhafte Vorbereitung der Nahtfuge und/oder eine ungenaue Programmierung eines beispielsweise nicht linearen Fugenverlaufs bedingt sein. Der durch ein Programm gesteuerte Laserarbeitsstrahl kann dabei teilweise außermittig zur Nahtfuge geführt werden, was zu gravierenden Fehlschweißungen führt.

Es sind Nahtsuchsysteme für das automatisierte Lichtbogenschweißen bekannt (Technisches Messen 51 1984, Heft 7/8, S. 259-263), bei dem die vorbereitete Nahtfuge mit einem mit einer Meßfrequenz von maximal 10 Hz quer über die Nahtfuge alternierenden Lasermeßstrahl abgetastet und die Lage des Laserarbeitsstrahls bzw. des Schweißbrenners relativ zur Nahtfuge im Falle einer Abweichung der Nahtfuge von der Sollage entsprechend korrigiert wird. Bei diesen bekannten Nahtsuchsystemen wird als Sensor eine Fotodiodenzeile verwendet. Bedingt durch die große Zahl der Meßstellen und die zur Auswertung erforderliche Zeit verfügen diese Nahtsuchsysteme nur über eine Meßgenauigkeit von etwa 0,2...0,5 mm. Andererseits sind aus dem Bereich der Oberflächenprofil- und -rauhigkeitsmeßtechnik sowie aus dem Bereich der optischen Speichertechnik (CD-Technik) Meßsysteme bekannt, die über eine sehr hohe Meßgenauigkeit von etwa 1 µm verfügen. Diese Meßsysteme müssen allerdings auch sehr nahe an das Meßobjekt herangeführt werden, d. h. der Abstand zu diesem beträgt im allgemeinen höchstens 1 mm.

Der Durchmesser des Brennflecks eines fokussierten Laserarbeitsstrahls beträgt teilweise nur 0,1...0,2 mm. Die zum Laserschweißen vorgesehenen Nahtfugen weisen wegen dieser sehr geringen Ausdehnung des Brennflecks ebenfalls nur sehr geringe Querschnittsabmessungen auf, so daß für den Schweißvorgang eine Meßgenauigkeit in der Größenordnung vom halben Durchmesser des Brennflecks, also von etwa 0,05 mm, erforderlich ist. Die mit den zuvor erwähnten Nahtsuchsystemen ereichbare Meßgenauigkeit ist also für derartige Fälle nicht ausreichend.

Die Vorschubgeschwindigkeit beim Laserschweißen kann bis in die Größenordnung von 100 mm/s ≙6 m/min. reichen und ist damit im allgemeinen bis zu zehnmal größer als die Geschwindigkeit beim Lichtbogenschweißen. Aus diesem Grund erweist sich auch die Meßfrequenz der für das Lichtbogenschweißen bekannten Meßsysteme als unzureichend, da die sich aus dem oszillierenden Meßstrahl ergebenden Meßsignale nicht genügend schnell vorliegen, um den Laserhauptstrahl bei den gegebenen Vorschubgeschwindigkeiten genau nachführen zu können.

Aus der Druckschrift EP-A2-0 266 764 sind ein Verfahren und eine Vorrichtung der eingangs erwähnten Gattung bekannt, bei denen der Lasermeßstrahl periodisch quer über die Nahtfuge geführt wird und möglichst kurz vor dem Laserarbeitsstrahl auf diese auftreffen soll. Die Vorveröffentlichung enthält darüber hinaus keine Hinweise über Mittel, mit denen sich auch bei den zuvor angesprochenen, höheren Vorschubgeschwindigkeiten eine ausreichende Meßgenauigkeit erreichen läßt.

Das Dokument US-A-4 700 045 beschreibt zwar den Einsatz eines Laserstrahls zur Herstellung einer Schweißnaht, welcher mittels einer akustisch-optischen Ablenkung in dem Bereich zwischen 170 bis 2100 Hz quer zur Nahtfuge bzw. Schweißnaht oszilliert wird, wobei die den Reflexionsstrahl erfassende Detektoreinheit einen Fotodetektor aufweist. Nicht angesprochen sind jedoch der gleichzeitige Einsatz eines Laserarbeitsstrahls und eines Lasermeßstrahls sowie dessen im Hinblick auf eine hohe Meßgenauigkeit erforderliche Handhabung und Ausgestaltung.

Die Vorveröffentlichung JP-A-58/205689 beschreibt im Zusammenhang mit der Nachführung eines Laserarbeitsstrahls auch den Einsatz eines diesem überlagerten Lasermeßstrahls, dem ein optoelektronischer Sensor nachgeschaltet ist. Die Nachführung im Hinblick auf die Schweißstellung erfolgt dabei in der Weise, daß beide Laserstrahlen gleichzeitig oszilliert werden.

Der Erfindung liegt die Aufgabe zugrunde, ein Verfahren und eine zu dessen Durchführung geeignete Vorrichtung zu entwickeln, das bzw. die auch bei Vorschub- bzw. Schweißgeschwindigkeiten von 100 mm/s eine ausreichend genaue und schnelle Erkennung der Lage auch einer für das Laserschweißen vorbereiteten kurvenförmigen Nahtfuge gewährleistet. Dabei wird unter "ausreichend genau" verstanden, daß die Meßgenauigkeit mindestens dem halben Durchmesser des Brennflecks des Laserarbeitsstrahls entspricht.

Diese Aufgabe wird erfindungsgemäß durch ein Verfahren mit den Merkmalen des Anspruchs 1 gelöst. Durch die vorgeschlagene Ablenkfrequenz des umgelenkten Lasermeßstrahls von mindestens 100 Hz wird gewährleistet, daß bei der obengenannten Vorschubgeschwindigkeit der Fugenverlauf noch in einem 1 mm-"Raster" erfaßt wird.

Durch Modulation der Lasermeßstrahlung und weitere, anschließende Demodulation des durch die Werkstücke zusätzlich amplitudenmodulierten Sensorsignals werden Störeinflüsse seitens des Laserschweißplasmas und der Planck'schen Strahlung des Schmelzbades eliminiert.

Vorteilhafte Weiterbildungen der Erfindung sind in den Unteransprüchen beschrieben.
Der mit dem Anspruch 2 vorgeschlagene Bereich der Ablenkfrequenz stellt einen bevorzugten Ausschnitt dar.

Die Aufgabe wird außerdem durch eine zur Durchführung des Verfahrens geeignete Vorrichtung gelöst, welche die Merkmale des Anspruchs 5 aufweist.
Bei der damit beschriebenen Ausgestaltung geht der Lasermeßstrahl stets durch den zentralen Bereich der Linsenanordnung, so daß bei Verwendung eines Achromaten als Fokussierelement teure Scannerlinsen zur Durchführung einer Verzerrungskorrektur entfallen können.
Zur Erzeugung des Lasermeßstrahls kann eine Laserdiode eingesetzt werden; diese stellt einen billigen Massenartikel dar, der - zumindest insoweit - eine kompakte, kostengünstige Bauweise der gesamten Vorrichtung ermöglicht.

Die Erfindung wird nachfolgend anhand eines in der Zeichnung dargestellten Ausführungsbeispiels näher erläutert. Es zeigen:
- Fig. 1: eine Vorrichtung zum Bestimmen der Lage einer Nahtfuge in einem Längsschnitt,
- Fig. 2: die Vorrichtung in einem auszugsweisen Schnitt gemäß der Linie II-II in Fig. 1 in stark verzerrter Darstellung,
- Fig. 3: Bestandteile der Vorrichtung in einer schematischen Darstellung,
- Fig. 4: die Streustrahlintensität eines Meßzustandes in Abhängigkeit vom Scanwinkel,
- Fig. 5: die Streustrahlintensität eines anderen Meßzustandes in Abhängigkeit vom Scanwinkel,
- Fig. 6: das Umwandeln eines Signaleinbruchs mit Hilfe einer Schwellwertoperation und
- Fig. 7: das Bild in der Fugenabweichung in der Sollage durch Ortsfilterung und Differentiation.

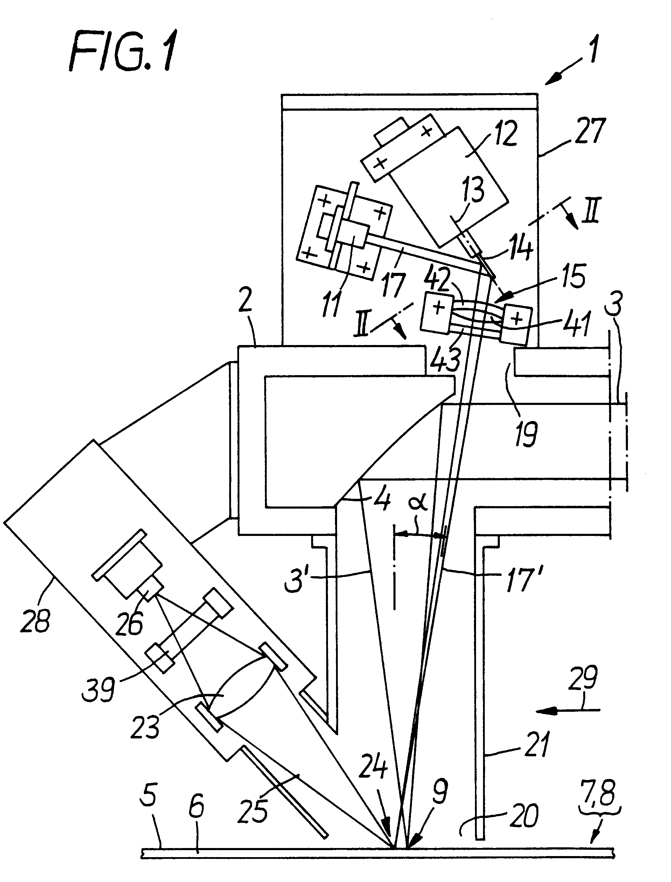

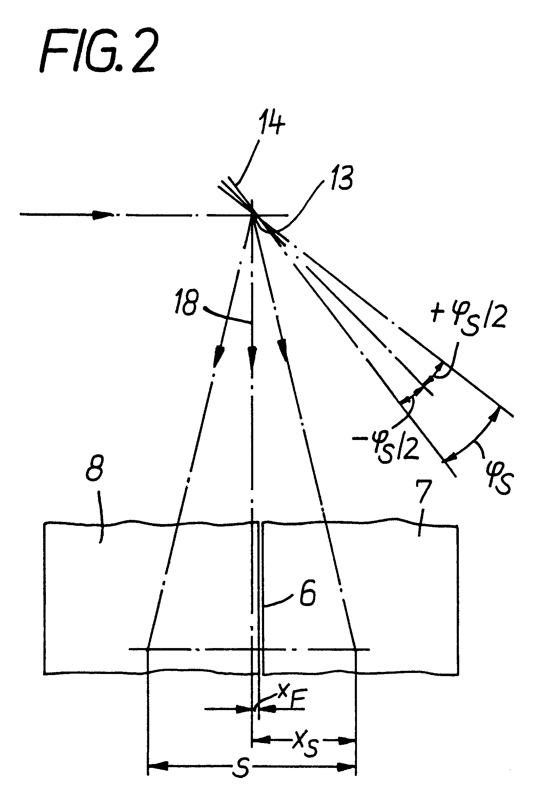

Die Vorrichtung 1 gemäß den Fig. 1 und 2 zum Bestimmen der Lage einer Nahtfuge mit einem Lasermeßstrahl (im folgenden auch kurz als "Lasermeßanordnung" bezeichnet) ist auf einem Laserschweißkopf 2 montiert, in dem ein kollimierter (einen gleichbleibenden Querschnitt aufweisender) Laserarbeitsstrahl 3 an einem konkaven Fokussierspiegel 4 umgelenkt und fokussiert wird. Der Laserschweißkopf 2 wird in einem solchen Abstand von der Oberfläche 5 der die Nahtfuge 6 bildenden Werkstücke 7, 8 angeordnet, daß der Brennpunkt bzw. Brennfleck 9 des fokussierten Laserarbeitsstrahls 3' in Höhe der Oberfläche 5 der Werkstücke 7, 8 auftrifft.

Die Vorrichtung 1 weist eine modulierbare Laserdiode 11, einen Galvanometer-Scanner 12 (im folgenden auch nur kurz als "Scanner" bezeichnet) mit einem Frequenzbereich von 0...250 Hz als Antriebsanordnung für einen periodisch um eine Schwenkachse 13 bewegbaren, plangestalteten Umlenkspiegel 14 und eine Fokussieroptik 15 auf. Der Umlenkspiegel 14 weist eine "normale" Mittellage auf, bei der die Achse eines von der Laserdiode 11 ausgesandten kollimierten Lasermeßstrahls 17 innerhalb der durch die Schwenkachse 13 senkrecht zur Oberfläche 5 gedachten Ebene 18 unter einem kleinen Winkel vor den Brennfleck 9 des fokussierten Laserarbeitsstrahls 3' umgelenkt wird. Dabei dringt der durch die Fokussieroptik 15 fokussierte Lasermeßstrahl 17' durch eine obere Öffnung 19 des Laserschweißkopfes 2 und die Ausgangsöffnung 20 eines unten am Laserschweißkopf 2 angebrachten Schutzrohres 21. Soweit der Laserarbeitsstrahl 3, 3' existent ist, wird auch dieser vom Lasermeßstrahl 17 bzw. 17' durchdrungen.

Der in der Laserdiode 11 erzeugte Lasermeßstrahl 17 wird in seiner Intensität i hochfrequent durch Variation des Versorgungsstroms moduliert. Die dabei angewandte Modulationsfrequenz f_{M} beträgt 200...450 kHz.

In der durch die Schwenkachse 13 des Umlenkspiegels 14 senkrecht zur Oberfläche 5 der Werkstücke gedachten Ebene 18 weist die Vorrichtung 1 eine weitere Fokussieroptik 23 auf, die ein vom Brennfleck 24 des fokussierten Lasermeßstrahls 17' ausgehendes kegelförmiges Laserstrahlbündel 25 - als Teil des gesamten vom Brennfleck 24 auf der Werkstückoberfläche 5 gestreut reflektierten Lichts - sammelt und auf einem als Fotodiode ausgebildeten optoelektronischen Detektor oder Sensor 26 abbildet.

Die Laserdiode 11 und der Galvanometer-Scanner 12 mit dem Spiegel 14 sind in einem Gehäuse 27 untergebracht, das auf dem Schweißkopf 2 angeordnet ist. Die zweite Fokussieroptik 23 und die Fotodiode 26 sind in einem weiteren Gehäuse 28 untergebracht, das an der Stirnseite des Schweißkopfes 2 angeordnet ist. Die Vorschubrichtung der Vorrichtung 1 und des Laserschweißkopfes 2 relativ zu den Werkstücken 7, 8 ist in Fig. 1 durch den Pfeil 29 angedeutet. Die Vorschubrichtung bewegter Werkstücke gegenüber einer feststehenden Meß- und Schweißvorrichtung wäre entsprechend umgekehrt darzustellen.

Beim Verschwenken des Spiegels 14 wird der fokussierte Lasermeßstrahl 17' auf der Werkstückoberfläche 5 quer zum Verlauf der vorbereiteten Nahtfuge 6 hin- und herbewegt. Dabei entspricht der Scanbereich s auf der Werkstückoberfläche 5 einem Schwenk- oder Scanwinkel φ ₛ des Umlenkspiegels 14 (der Spiegel 14 wird dabei von - φ ₛ/2 bis + φ ₛ/2 und wieder zurück geschwenkt). Der Sollwert des Scanbereichs s₀ bzw. des Scan- oder Schwenkwinkelbereichs φ ₛ₀ ist durch einen ggf. integrierten Sollwertgeber 31 vorgebbar.

Es versteht sich, daß die Laserdiode 11 und der Scanner 12 mit dem Umlenkspiegel 14 innerhalb der Vorrichtung 1 (durch nicht dargestellte Mittel wie z.B. Stellschrauben) jeweils nach Lage und Richtung einstellbar sind. Soweit möglich, wird die Vorrichtung 1 insgesamt so positioniert, daß die Achse des fokussierten Lasermeßstrahls 17', wenn sich der Spiegel 14 in seiner "Mittellage" befindet, auf die vorbereitete Nahtfuge 6 fällt.

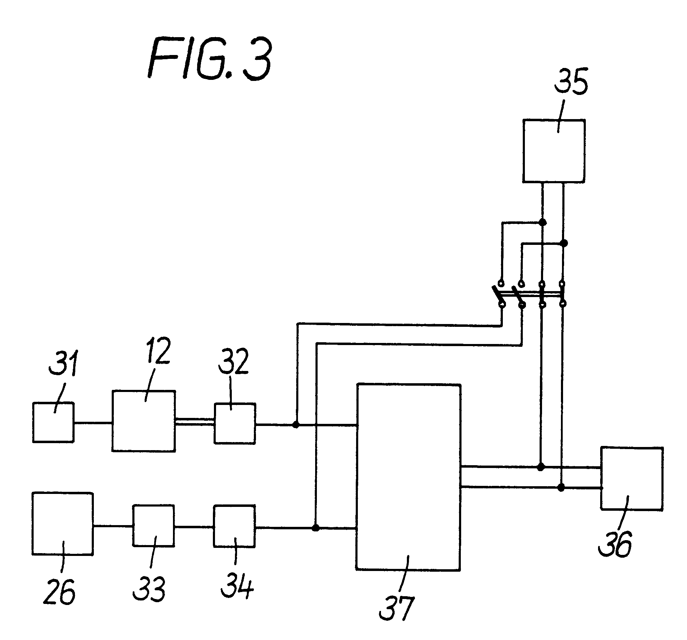

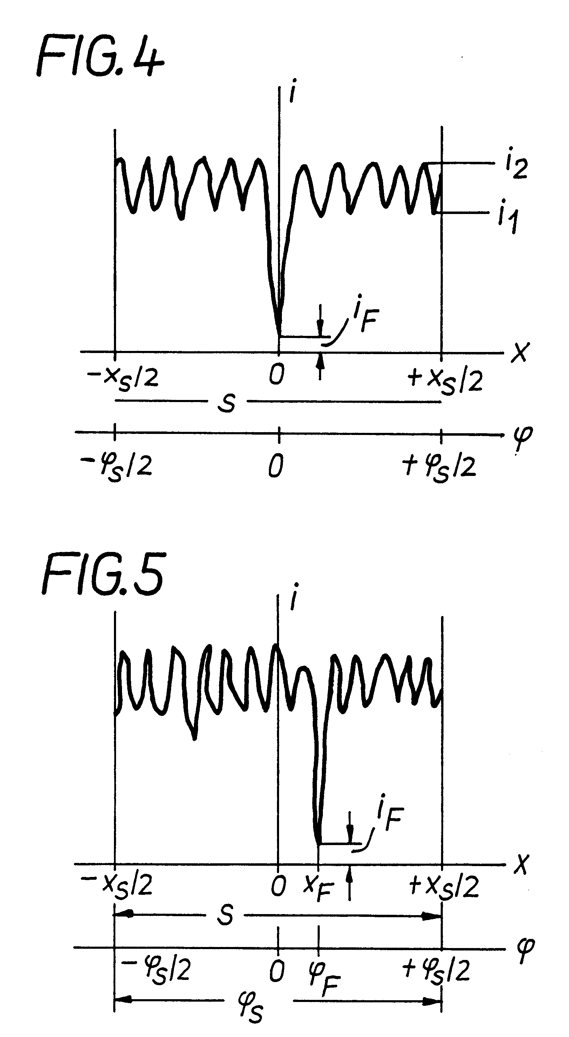

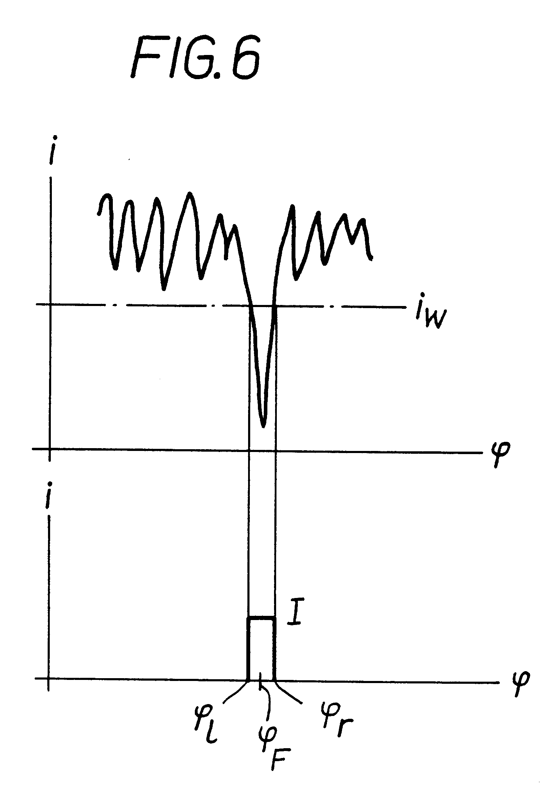

Der Scanner 12 weist einen ggf. integrierten, in Fig. 3 separat dargestellten Winkelaufnehmer bzw. Wegaufnehmer 32 auf, mit dem die jeweilige Schwenk- oder Scanwinkellage φ des Spiegels 14 gegenüber seiner "normalen" Mittellage und - bei bekanntem Abstand vom Mittelpunkt des Spiegels 14 auf der Schwenkachse 13 bis zu dem Brennfleck 24 des fokussierten Lasermeßstrahls 17' - der jeweilige Abstand x der Achse des Lasermeßstrahls 17' von der jeweiligen Mittellage bzw. Sollposition (entsprechend der Ebene 18 bzw. dem Punkt O in den Fig. 4 und 5) ermittelt werden kann. Durch die bei technischen Erzeugnissen immer etwas rauhe Oberfläche ergibt sich ein durch den Lasermeßstrahl 17' erzeugtes reflektiertes Streulicht, von dem ein Teil - in Fig. 1 als Laserstrahllichtbündel 25 dargestellt-in die Fotodiode 26 gelangt. Das durch das Streulicht in der Fotodiode 26 erzeugte Ausgangssignal wird durch einen auf die Modulationsfrequenz f_{M} abgestimmten Filter 33 als Demodulator und einen auf die Frequenz des Scanners 12 und der gewünschten Ortsauflösung von 0,05 mm abgestimmten Tiefpaßfilter 34 gegeben. Das am Ausgang des Tiefpaßfilters 34 anstehende Signal hat die Intensität i.

In Fig. 4 ist ein Verlauf der Intensität i, die durch das von der Oberfläche reflektierte Streulicht hervorgerufen wird, in Abhängigkeit von der Abweichung x des jeweiligen Brennflecks 24 des Lasermeßstrahls 17' von der Mittel- bzw. Sollage idealisiert dargestellt. Dieser Kurvenverlauf kann in einem mit den Ausgängen des Winkelaufnehmers 26 und des Tiefpaßfilters 34 verbundenen Oszillographen 35 gewonnen werden. Der gezeigte Bereich entspricht - in Scan- bzw. Abszissenrichtung - der Scanbreite s bzw. dem Scanbereich - x_{s/2}bis + x_{s/2}; diesem ist ein Scanwinkelbereich φₛ, d.h. eine Winkelabweichung von der Mittellage des Spiegels 14 von - φ ₛ/2 bis + φ ₛ/2, zugeordnet.

Die am Ausgang des Tiefpaßfilters 34 gemessene Streustrahlintensität i ist sowohl von der Mikroals auch von der Makrostruktur der Werkstückoberfläche 5 abhängig. Beim Abtasten der eigentlichen Werkstückoberfläche 5 erhält man immer Streulicht, das, durch die Rauhigkeit der Werkstückoberfläche bedingt, mehr oder weniger stark verrauscht ist. Die Streustrahlintensität i schwankt - soweit die Oberfläche der Werkstücke betroffen ist - in einem Bereich zwischen (etwas vereinfacht) den Werten i₁ und i₂. Zur Makrostruktur der Oberfläche 5 gehört die der Lage nach zu bestimmende Nahtfuge 6. Aufgrund eines Brennflecks 24 des fokussierten Lasermeßstrahls 17' von etwa 30 µm und einer selbst bei aneinanderstoßenden Werkstücken an vielen Stellen der Nahtfuge vorhandenen vergleichbaren großen Restspaltbreite bewirkt die Nahtfuge 6 eine vollständige Absorption des Lasermeßstrahls 17' bzw. des durch diesen hervorgerufenen Streulichts. Beim Einfallen des fokussierten Lasermeßstrahls 17' in die vorbereitete Nahtfuge 6 wird also beim Überschreiten derselben durch den Brennfleck 24 praktisch kein Laserlicht reflektiert bzw. gestreut, und es ergibt sich für die Intensität i ein kurzzeitiger Signaleinbruch am Ausgang des Tiefpaßfilters 34 bis zu einem extrem niedrigen Wert i_{F} (Index "F" für "Fuge").

Aus dem in Fig. 4 dargestellten Meßbild ergibt sich, daß sich die Nahtfuge 6 genau in der Mitte des Scanbereichs s, d.h. in ihrer Sollposition befindet. Eine Anpassung der Position der die Nahtfuge bildenden Werkstücke 7, 8 relativ zum Laserschweißkopf 2 bzw. zum Brennfleck 9 des Laserarbeitsstrahls 3' durch eine Nachführeinrichtung 36 ist daher in diesem Fall nicht notwendig.

Bei dem in Fig. 5 dargestellten Meßbild ergibt sich, daß das der vorbereiteten Nahtfuge 6 entsprechende Intensitätssignal i_{F} einem Scanwinkel φ_{F} > O zugeordnet ist. Die Nahtfuge 6 befindet sich somit nicht in ihrer Sollposition relativ zur Achse des Laserarbeitsstrahls 3'. Die relative Position muß deshalb entsprechend dem Scanwinkel φ_{F} durch die Nachführ- oder Verstelleinrichtung 36 korrigiert werden.

Die Ausgänge des Tiefpaßfilters 34 und des Winkelaufnehmers 32 sind je getrennt mit einem Auswerterechner 37 verbunden, in dem der Verlauf des Intensitätssignals i in Abhängigkeit vom Scanwinkel φ mehrerer Meßzyklen (entsprechend mehreren Schwingungen des Umlenkspiegels 14) gespeichert wird.

Im Auswerterechner 37 wird jeder Signalverlauf i einer sogenannten Schwellwertoperation unterworfen. Dabei werden alle diskreten Werte i des Signalverlaufs mit einem vorgebbaren Schwellwert i_{W} verglichen (vgl. Fig. 5). Alle Werte i > i_{W} werden dabei in einen Signalwert Null umgewandelt, d.h. sie bleiben bei der Auswertung außer Betracht und alle Werte i ≦ i_{W} werden in einen konstanten Signalwert O überführt (in Fig. 6 ist das aus dem Signalverlauf gemäß Fig. 5 gewonnene Signal I in Ordinatenrichtung stark verzerrt darstellt). Aus den Verknüpfungen i = f(φ) bzw. φ = F(i) ergeben sich die beiden "Grenzwinkel" φ ₗ und φ ᵣ, zwischen denen das Signal I besteht. Dabei wird die Mitte der Nahtfuge 6 dem Winkel φ _{F} = (φ ₗ - φ ᵣ)/2 zugeordnet. Aus φ _{F} und den konkreten technischen Gegebenheiten der Anordnung 1 ergibt sich die entsprechende Abweichung x_{F}.

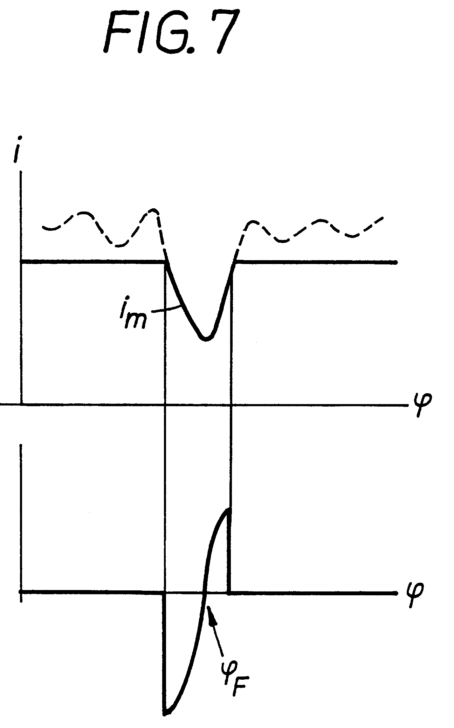

Eine weitere Bestimmung der Lage der Nahtfuge 6 ergibt sich, wenn der Signalverlauf i einer sog. Ortsfilterung unterworfen wird. Dabei wird für jeden diskreten Wert i des Signalverlaufs der Mittelwert aus dem Wert i und n vor und n hinter dem Wert i liegenden Werten gebildet (n beliebig). Dadurch ergibt sich eine Abflachung kleinerer Signalunterschiede, während der Signaleinbruch i_{F} deutlich bestehen bleibt. Zur Einsparung von Rechnerkapazität wird die Ortsfilterung zweckmäßigerweise im Zusammenhang mit der Schwellwertoperation durchgeführt. Dabei können die den Schwellwert i_{W} übersteigenden, durch die Ortsfilterung ermittelten Werte Iₘ in den konstanten Schwellwert überführt werden. Ein derartig gewonnener Signalverlauf iₘ ist oben in Fig. 7 (in Ordinatenrichtung stark verzerrt) dargestellt. Dieser Signalverlauf wird anschließend differenziert und führt z.B. zu dem unten in Fig. 7 dargestellten Signalverlauf. Dabei ergibt sich das Fugensignal φ _{F} als Nulldurchgang der Differentiationskurve. Dieses Verfahren ist insbesondere dann von Vorteil, wenn das Fugensignal i_{F} nicht mittig zwischen den sich durch die Schwellwertoperation ergebenden Eckwerte i(φ ₗ) und i(φ ᵣ) liegt.

Um durch Kratzer auf der Oberfläche 5 der Werkstücke 7, 8 hervorgerufene Signaleinbrüche nicht als Fugensignale zu mißdeuten, werden die als Fugensignale ermittelten Werte mit vorangegangenen Werten verglichen. Weichen ermittelte Werte zu stark von vorangegangenen Werten ab, ist vorgesehen, den Schweißvorgang zu unterbrechen.

Die Abweichung x_{F} der Nahtfuge 6 von ihrer Sollage über die entsprechende Winkelabweichung φ _{F} erfolgt zweckmäßigerweise mit mindestens 200 Hz.

Um Störstrahlung, die vor allem von dem Laserschweißplasma ausgeht, weitgehend zu unterdrücken, wird in Ergänzung zu dem beschriebenen Ausführungsbeispiel ein schmalbandiges Interferenzfilter 39, das auf die Wellenlänge der Laserdiode 11 abgestimmt ist, vor der zweiten Fokussieroptik 23 angeordnet.

Der Lasermeßstrahl 17' wird mit einer als Achromat ausgebildeten Fokussieroptik 15, der aus den beiden Linsen 41 und 42 besteht, auf den Brennfleck 24 fokussiert.

Um den Signaleinbruch i_{F} beim Überschreiten des fokussierten Lasermeßstrahls 17' über die vorbereitete Nahtfuge 6 möglichst deutlich werden zu lassen, ist der Fokussieroptik 15 eine zusätzliche Linse 43 mit zylindrischer Komponente zugeordnet. Dabei ist die Achse der zylindrischen Linse 43 in Richtung der Nahtfuge 6 so ausgerichtet, daß sich der Brennfleck 24 des Lasermeßstrahls als "Brenn-Ellipse" ausbildet, deren längere Achse parallel zur Nahtfuge ausgerichtet ist. Die Stärke der zylindrischen Linsen wird zweckmäßigerweise so gewählt, daß sich bei der "Brenn-Ellipse" ein Achsenverhältnis von 10:1 einstellt. Durch diese Maßnahme reduziert man mögliche Störsignale (Kratzer, Riefen) von der Oberfläche 5 der zu fügenden Werkstücke 7, 8.

## Patentansprüche

1. Verfahren zum Bestimmen der Lage einer Nahtfuge (6) bezüglich einer Sollage mit der Möglichkeit, die Relativlage eines Laserarbeitsstrahls (3,3') zu der Nahtfuge dadurch zu korrigieren, daß ein kollimierter Lasermeßstrahl (17') alternierend um den Verlauf der Nahtfuge (6) umgelenkt sowie fokussiert, nach Reflexion an der die Nahtfuge bildenden Werkstückanordnung (7, 8) von einem optoelektronischen Sensor (26) mit lediglich einem lichtempfindlichen Sensorelement erfaßt und in Form eines dort erzeugten Ausgangssignals einer gleichzeitig den Laserarbeitsstrahl (3, 3') und den Lasermeßstrahl (17, 17') verschiebenden Nachführeinrichtung zugeleitet wird, wobei letzterer (17') in einem geringen Abstand von der Achse des Laserarbeitsstrahls (3') auf die Werkstückanordnung (7, 8) auftrifft,
**dadurch gekennzeichnet,**
daß die Ablenkfrequenz des umgelenkten Lasermeßstrahls (17') mindestens 100 Hz beträgt, der in seiner Intensität (i) mit mindestens 200 kHz moduliert wird und in einem Abstand von höchstens 10 mm von der Achse des Laserarbeitsstrahls (3') auf die Werkstückanordnung (7, 8) auftrifft.

2. Verfahren nach Anspruch 1, dadurch gekennzeichnet, daß die Ablenkfrequenz des umgelenkten Lasermeßstrahls (17') mindestens 200 Hz beträgt.

3. Verfahren nach Anspruch 1 oder 2, dadurch gekennzeichnet, daß der Laserstrahl (17') in einem Abstand von höchstens 5 mm von der Achse des Laserarbeitsstrahls (17') auf die Werkstückanordnung (7, 8) trifft.

4. Verfahren nach einem der Ansprüche 1 bis 3, dadurch gekennzeichnet, daß von den Ausgangssignalen des optoelektronischen Sensors (26) nur die einen vorgebbaren Schwellwert (i_{W}) der Intensität (i) unterschreitenden Meßsignale zur Auswertung weitergeleitet werden.

5. Vorrichtung an einem einen Laserarbeitsstrahl (3,3') aufweisenden Laserschweißkopf (2) mit einer einen kollimierten Lasermeßstrahl (17) aussendenden Laserquelle (11), einem in seiner Winkellage periodisch bewegbaren Ablenkspiegel (14) - über den der Lasermeßstrahl (17') alternierend um den Verlauf der von einer Werkstückanordnung (7, 8) gebildeten Nahtfuge (6) umlenkbar ist -, mindestens einem den austretenden Lasermeßstrahl (17') fokussierenden Fokussierelement (15), einem dazu fest angeordneten optoelektronischen Sensor (26) mit einem einzigen lichtempfindlichen Sensorelement und einer gleichzeitig den Laserarbeits- sowie den Lasermeßstrahl (3, 3' bzw. 17, 17') verschiebenden Nachführeinrichtung, wobei der letztere (17') derart ausgerichtet ist, daß er in einem geringen Abstand von der Achse des Laserarbeitsstrahls (3') auf die Werkstückanordnung (7, 8) auftrifft, zur Durchführung des Verfahrens nach den Ansprüchen 1 bis 4,
**dadurch gekennzeichnet,**
- daß die durch den Ablenkspiegel (14) hervorgerufene Ablenkfrequenz des umgelenkten Lasermeßstrahls (17') mindestens 100 Hz beträgt, dessen Intensität (i) mit mindestens 200 kHz moduliert ist und der in einem Abstand von höchstens 10 mm von der Achse des Laserarbeitsstrahls (3') auf die Werkstückanordnung (7, 8) auftrifft,
- daß der Ablenkspiegel (14) mit einem Winkelaufnehmer (32) verbunden ist,
- daß das Fokussierelement (15) als Achromat mit mindestens einer konvexen und einer konkaven Linse (41 bzw. 42) ausgebildet ist,
- daß dem Ausgang des optoelektronischen Sensors (26) ein Demodulationsfilter (33) sowie ein Tiefpaßfilter (34) nachgeschaltet sind und
- daß die Ausgänge des Tiefpaßfilters (34) und des Winkelaufnehmers (32) mit einem der Nachführeinrichtung (36) vorgeschalteten Auswerterechner (37) in Verbindung stehen.

## Claims

1. Procedure for determining the position of a seam (6) relative to a desired position with the possibility of correcting the relative position of a laser working beam (3, 3') to said seam in that a collimated laser measurement beam (17') is deflected and focussed alternately around the course of said seam (6), is detected by an opto-electronic sensor (26) having only one light-sensitive sensor element after reflection on the workpiece arrangement (7, 8) forming said seam, and is directed in the form of an output signal generated therein to a tracker shifting the laser working beam (3, 3') and the laser measurement beam (17, 17') simultaneously, wherein the latter (17') hits said workpiece arrangement (7, 8) at a short distance from the axis of said laser working beam (3'), characterised in that the deflection frequency of the deflected laser measurement beam (17') amounts to at least 100 Hz, said laser measurement beam (17') is modulated in its intensity (i) to at least 200 kHz and hits said workpiece arrangement (7, 8) at a distance of 10 mm at maximum from the axis of said laser working beam (3').

2. Procedure according to Claim 1, characterised in that the deflection frequency of the deflected laser measurement beam (17') amounts to at least 200 Hz.

3. Procedure according to Claim 1 or 2, characterised in that the laser beam (17') hits the workpiece arrangement (7, 8) at a distance of 5 mm at maximum from the axis of the laser working beam (3').

4. Procedure according to one of Claims 1 to 3, characterised in that of the output signals from the opto-electronic sensor (26), only those measured signals falling below a threshold (i_{w}) of intensity (i) which may be preset are passed on for evaluation.

5. Apparatus on a laser welding head (2) having a laser working beam (3, 3'), comprising a laser source (11) emitting a collimated laser measurement beam (17), a deflection mirror (14), the relative position of which is periodically movable - by means of which deflection mirror (14) said laser measurement beam (17') may be deflected alternately around the course of the seam (6) formed by a workpiece arrangement (7, 8) -, and comprising at least one focussing element (15) to focus the outgoing laser measurement beam (17'), an opto-electronic sensor (26) fixedly arranged thereon having a single light-sensitive sensor element and a tracker shifting the laser working and laser measurement beams (3, 3' and 17,17' respectively) simultaneously, whereby the latter (17') is aligned so that it hits said workpiece arrangement (7, 8) at a short distance from the axis of said laser working beam (3'), for implementing the procedure according to Claims 1 to 4, characterised in that
- the deflection frequency of the deflected laser measurement beam (17') amounts to at least 100 Hz, said laser measurement beam (17') is modulated in its intensity (i) to at least 200 kHz and hits said workpiece arrangement (7, 8) at a distance of 10 mm at maximum from the axis of said laser working beam (3');
- the deflection mirror (14) is connected to an angle recorder (32);
- the focussing element (15) is in the form of an achromatic objective with at least one convex and one concave lens (41 and 42 respectively);
- a demodulation filter (33) and a low-pass filter (34) are connected in series to the output of the opto-electronic sensor (26); and
- that the outputs of said low-pass filter (34) and said angle recorder (32) are connected to an analyser computer (37) connected in series to said tracker (36).

## Revendications

1. Procédé pour déterminer la position d'un joint de soudure (6) par rapport à une position de consigne, comportant la possibilité de corriger la position relative d'un rayon laser d'usinage (3, 3') par rapport au joint de soudure par le fait qu'un rayon laser de mesure (17') collimaté est dévié alternativement autour du tracé du joint (6) de soudure et focalisé, et qu'après réflexion sur l'ensemble formé par les pièces à usiner (7, 8) formant le joint de soudure, ce rayon est capté par un détecteur optoélectronique (26) comportant un organe de détection sensible à la lumière, puis est envoyé, sous la forme d'un signal de sortie qui y est produit, à un dispositif suiveur faisant déplacer en même temps le rayon laser d'usinage (3, 3') et le rayon laser de mesure (17, 17'), étant entendu que ce dernier rayon (17') rencontre, à une faible distance de l'axe du rayon laser d'usinage (3, 3'), l'ensemble formé par les pièces à usiner (7, 8),
caractérisé en ce que
la fréquence de balayage du rayon laser de mesure (17') dévié est d'au moins 100 Hz, rayon qui est modulé en intensité (i) avec au moins 200 kHz , et qui rencontre, à une distance d'au plus 10 mm de l'axe du rayon laser d'usinage (3'), l'ensemble formé par les pièces à usiner (7, 8).

2. Procédé suivant la revendication 1, caractérisé en ce que la fréquence de balayage du rayon laser de mesure (17') dévié est d'au moins 200 Hz.

3. Procédé suivant la revendication 1 ou la revendication 2, caractérisé en ce que le rayon laser de mesure (17') rencontre, à une distance d'au plus 5 mm de l'axe du rayon laser d'usinage (3'), l'ensemble formé par les pièces à usiner (7, 8).

4. Procédé suivant l'une quelconque des revendications 1 à 3, caractérisé en ce que, parmi les signaux de sortie du détecteur optoélectronique (26), seuls les signaux de mesure passant en dessous d'une valeur-seuil (i_{W}) de l'intensité (i) sont transmis à l'unité d'interprétation.

5. Dispositif, pour la réalisation du procédé suivant les revendications 1 à 4, monté sur une tête de soudage par laser (2) présentant un rayon laser d'usinage (3, 3'), comportant une source laser (11) émettant un rayon laser de mesure (17') collimaté, un miroir de déviation (14), à position angulaire mobile suivant une certaine période, - au moyen duquel le rayon laser de mesure (17') peut être dévié alternativement autour du tracé du le joint (6) de soudure formé par un ensemble de pièces à usiner (7, 8) -, au moins un organe de focalisation (15), focalisant le rayon laser de mesure (17') sortant, un détecteur optoélectronique (26) placé fixe sur lui et comportant un unique organe de détection sensible à la lumière et un dispositif suiveur décalant simultanément les rayons laser d'usinage et de mesure (respectivement 3, 3' et 17, 17'), étant entendu que ce dernier rayon (17') a une direction telle qu'il rencontre l'ensemble formé par les pièces à usiner (7, 8) à une faible distance de l'axe du rayon laser d'usinage (3'),
caractérisé en ce que
- la fréquence de balayage du rayon laser de mesure (17') dévié, produite par le miroir de déviation (14), est d'au moins 100 Hz, rayon dont l'intensité (i) est modulée avec au moins 200 kHz et qui arrive sur l'ensemble formé par les pièces à usiner (7, 8) avec un écart d'au plus 10 mm par rapport à l'axe du rayon laser d'usinage (3'),
- en ce que le miroir de déviation (14) est relié à un détecteur d'angle (32),
- en ce que l'organe de focalisation (15) est réalisé sous la forme d'un ensemble achromatique comportant au moins une lentille convexe et une lentille concave (respectivement 41 et 42),
- en ce qu'un filtre de démodulation (33), ainsi qu'un filtre "passe-bas" (34) sont placés en aval de la sortie du détecteur optoélectronique (26), et
- en ce que les sorties du filtre passe-bas (34) et du détecteur d'angle (32) sont raccordées à un calculateur d'interprétation (37), placé en amont du dispositif suiveur (36).
